# EUROPÄISCHE PATENTSCHRIFT

(11) **EP 3 686 043 B1**
(45) Veröffentlichungstag und Bekanntmachung des Hinweises auf die Patenterteilung: **22.09.2021**
(21) Anmeldenummer: 19203999.8
(22) Anmeldetag: 18.10.2019
(51) Int. Cl.: B60K 35/00, B32B 17/10, G02F 1/167, G09F 21/04, G02F 1/139

(54) **FAHRZEUG MIT ANZEIGEEINRICHTUNG**
VEHICLE WITH DISPLAY DEVICE
VÉHICULE POURVU DE DISPOSITIF D'AFFICHAGE

(30) Priorität: 16.11.2018 DE 102018128904
(43) Veröffentlichungstag der Anmeldung: 29.07.2020
(73) Patentinhaber: Huf Hülsbeck & Fürst GmbH & Co. KG, 42551 Velbert (DE)
(72) Erfinder: Chabrowski, Christian, 45472 Mülheim (DE)
(74) Vertreter: Zenz Patentanwälte Partnerschaft mbB

(56) Entgegenhaltungen:
- DE-U1-202016 002 701
- KR-A- 20170 007 593
- US-A1- 2014 042 200
- US-A1- 2016 098 756
- US-A1- 2018 186 309

## Beschreibung

Die Erfindung betrifft ein Fahrzeug mit einer Anzeigeeinrichtung. Insbesondere betrifft die Erfindung ein Kraftfahrzeug mit einer Anzeigeeinrichtung, wobei die Anzeigeeinrichtung an der Außenhaut des Fahrzeuges angeordnet und zur Ablesung nach außen ausgerichtet ist. Die Anzeigeeinrichtung weist ein Display mit einem Pixel-Array mit Einzelpixelansteuerung auf.

Kraftfahrzeuge sind mit vielfältigen Anzeigeeinrichtungen ausgestattet. Im Innenbereich des Fahrzeuges stellen Anzeigeeinrichtungen Informationen an den Fahrer oder die Beifahrer des Kraftfahrzeuges bereit. Die Instrumenten-Anzeigen des Fahrzeuges informieren einen Fahrer jederzeit über den Zustand des Kraftfahrzeuges. Sowohl mechanische Anzeigen als auch elektronische Displays verschiedener Gestaltung kommen dafür zum Einsatz.

Auch zur Anzeige in den Außenbereich eines Fahrzeuges sind Anzeigeeinrichtungen bekannt. Beispielsweise offenbart das Dokument WO 2015/042005 A1 eine interaktive Anzeigeeinrichtung, die im Fenster eines Kraftfahrzeuges angeordnet ist und interaktive Kommunikation mit dem Fahrzeug erlaubt.

Derartige Systeme sind jedoch hinsichtlich ihrer Gestaltung und Verkabelung, ihres Strombedarfes und ihrer Anpassung auf unterschiedliche Kraftfahrzeugtypen unflexibel und komplex.

Haltestabile Anzeigen sind aus der Technik ebenfalls bekannt. Die DE 20 2016 002 701 U1 offenbart eine Werbeanzeige mit elektrophoretischem Display zur Anordnung an Lastfahrzeugen.

Ein elektrophoretisches Nummernschild ist aus dem Dokument US 2018/0186309 A1 bekannt. Das Dokument US 2016/0098756 A1 beschreibt ebenfalls eine Werbeanzeige mit haltestabilem Display zur Platzierung an einem Fahrzeug. Aus US 2014/0042200 A1 ist eine boxförmige Werbeeinrichtung zur Platzierung an Fahrzeugen bekannt.

Aufgabe der Erfindung ist es, ein flexibel einsetzbares System zur Anzeige von Fahrzeugdaten an einem Kraftfahrzeug bereitzustellen.

Diese Aufgabe wird durch ein Kraftfahrzeug mit den Merkmalen des Patentanspruches 1 gelöst.

Als Display der Anzeigeeinrichtung wird ein elektrophoretisches Display eingesetzt. Das elektrophoretische Display ist als bistabiles (haltestabiles) Display ausgestaltet.

Elektrophoretische Displays weisen eine Struktur auf, bei der zwei Elektrodensubstrate, von denen wenigstens eine sichtseitige Elektrode transparent ist, voneinander beabstandet angeordnet sind. Zwischen diesen Elektroden befindet sich eine Flüssigkeit, in welcher Partikel aufgenommen sind. Die Elektroden bilden eine räumliche, zweidimensionale Struktur, die eine pixelweise Anordnung zur Aktivierung gegenüberliegender Elektrodenabschnitte erlaubt. Durch das Anlegen eines elektrischen Feldes in einem Pixel kann dann in den Partikeln, die in der Flüssigkeit mobil sind, eine Ausrichtung oder Bewegung im elektrostatischen Feld erreicht werden. Bei einigen Displayarten werden die Partikel mit einer Farbseite in Sichtrichtung orientiert, bei anderen Displayarten werden unterschiedliche Partikelarten gemäß der Feldverteilung in Feldrichtung sortiert, so dass der optische Eindruck bei Aufsicht in Abhängigkeit von dem anliegenden Feld variiert werden kann.

Derartige elektrophoretische Displays haben den Vorteil, dass sie äußerst geringen Energiebedarf haben und außerdem ihren Anzeigezustand nach Wegnahme der Spannungsversorgung halten können.

Die Anzeigeeinrichtung mit einem derartigen elektrophoretischen Display ist am Fahrzeug so angeordnet, dass im Bereich der Außenhaut, also im Bereich der äußeren Karosserie oder der Fenster, eine Darstellung auf dem elektrophoretischen Display dargeboten wird. Die Anzeigeeinrichtung dient dazu, Fahrzeugdaten anzuzeigen, beispielsweise Informationen über den Tankinhalt oder ähnliches. Außerdem kann über die Anzeigeeinrichtung eine Informationsschnittstelle zum Lesen von Fahrzeugbenutzern oder Dritten angeboten werden. Bei diesen Dritten kann es sich z.B. um Kontrollpersonen oder Sicherheitspersonal handeln.

Als bistabiles elektrophoretisches Display kommt jedes am Markt verfügbare elektrophoretische Display mit der genannten Eigenschaft in Betracht, insbesondere auch Displays, die unter dem Markennamen ePaper oder eInk (Produkte der E Ink Holdings Inc.) verfügbar sind.

Derartige Displays haben einen äußerst geringen Energiebedarf, der außerdem nur dann besteht, wenn der Anzeigezustand des Displays geändert wird. Entsprechend kann die Anzeigeeinrichtung mit zugeordneten Pufferspeichern arbeiten, die im Betrieb des Fahrzeuges von einer zentralen Energieversorgung des Fahrzeuges gespeist und aufgeladen werden. Bei Stillstand des Fahrzeuges kann dann die Anzeigeeinrichtung autonom, ggf. völlig ohne Zugriff auf die fahrzeugseitige Energieversorgung die Anzeige schalten.

Gemäß der Erfindung ist das Display der Anzeigeeinrichtung mit einer zentralen Fahrzeugsteuereinrichtung gekoppelt und von dieser zur Anzeige von Fahrzeugdaten ansteuerbar. Die Anzeigeeinrichtung erhält von der zentralen Fahrzeugsteuereinrichtung demnach relevante Fahrzeugdaten und kann diese, insbesondere bei Beginn des Ruhezustands des Fahrzeuges, dauerhaft oder im zeitlichen Wechsel zur Anzeige bringen. Beispielsweise können dabei Daten wie der Kilometerstand, ein Tankinhalt, Identifizierungsdaten des Fahrzeuges zur Anzeige gebracht werden. Die Anzeige kann dafür in personenlesbarer Form, also in Schriftzeichen dargestellt werden, es kann jedoch auch eine maschinenlesbare optische Darstellung präsentiert werden, insbesondere Strichcodes oder QR-Codes.

In einer bevorzugten Ausführungsform der Erfindung ist das Display als elektrophoretisches Mehrfarb-Display ausgebildet.

Derartige elektrophoretische Mehrfarb-Displays sind am Markt verfügbar und erweitern die Funktionsmöglichkeiten und Darstellungsmöglichkeiten der normalerweise monochromen elektrophoretischen Displays. Fahrzeugzustände können auf diese Weise besonders intuitiv signalisiert werden, beispielsweise durch Darstellung von Fehlerzuständen oder kritischen Statusmitteilungen durch farbliche Hervorhebung.

Es ist besonders vorteilhaft, wenn das Display als biegsames Display ausgebildet ist und auf einen gebogenen Abschnitt der Außenhaut des Fahrzeuges aufliegt.

Elektrophoretische Displays sind in biegsamer Gestaltung verfügbar und diese Eigenschaft macht sich besonders flexibel an unterschiedlichen Fahrzeugtypen und Positionen an der Außenhaut des Fahrzeuges einsetzbar. Ein und dasselbe elektrophoretische Display kann für verschiedene Fahrzeugtypen eingesetzt werden, ohne dass es einer Anpassung des Displays an die Außenform und Konturen des Fahrzeuges bedarf. Die Kosten für eine derartige Displayanzeige liegen daher deutlich unterhalb der Kosten einer anderen Displaytechnologie.

In einer Weiterbildung der Erfindung ist die Anzeigeeinrichtung mit einer Nahfeld-Kommunikationsschaltung gekoppelt, wobei das Display mit der Nahfeld-Kommunikationseinrichtung derart gekoppelt ist, dass über Nahfeld-Kommunikation empfangene Daten auf dem Display dargestellt werden.

Wenn die Anzeigeeinrichtung eine Nahfeld-Kommunikationseinrichtung, beispielsweise NFC-Kommunikationseinrichtung, aufweist, so erweitern sich die Einsatzmöglichkeiten der Anzeigeeinrichtung. Beispielsweise kann eine Kontrollperson, die dem Benutzer des Fahrzeuges eine Information oder einen Hinweis hinterlassen möchte, über eine Nahfeld-Kommunikationseinrichtung die Nachricht an die Anzeigeeinrichtung übermitteln, die dann auf dem Display dargestellt wird. So kann ein derartiges Display am Fahrzeug den Fahrer vor Fahrtantritt informieren, beispielsweise über ein erteiltes Ticket wegen Falschparkens oder den Hinweis von Kontroll- oder Schutzpersonen, wenn das abgestellte Fahrzeug in einen Unfall verwickelt wurde und diesbezüglich Informationen an den Halter mitgeteilt werden sollen. Es wird in einfacher Weise eine Schnittstelle bereitgestellt, die eine einfache und ohne weiteres ersichtliche Kommunikationsmöglichkeit für den Fahrer bereithält. Kehrt der Halter des Fahrzeuges zu seinem Fahrzeug zurück und nimmt die Nachricht zur Kenntnis, so kann er durch einen Benutzungseingriff im Inneren des Fahrzeuges, eine Betätigung seines Fahrzeugschlüssels oder seinerseits durch Ansteuerung der Anzeigeeinrichtung über Nahfeld-Kommunikation die Anzeige aufheben.

Besonders bevorzugt ist es, wenn sowohl das Display als auch die Nahfeld-Kommunikationseinrichtung zum passiven Betrieb ausgebildet sind und die Energie zur Kommunikation und zur Displayansteuerung aus dem Nahfeld gewinnen.

Eine derartige Ansteuerung kann ein passiver Betriebsmodus sein, während die Anzeigeeinrichtung auch aktive Betriebsmodi aufweist. Die passiven Betriebsmöglichkeiten sind aus dem Nahfeld-Kommunikationsstandards, insbesondere dem NFC-Kommunikationsstandard bekannt. Angesichts der äußerst geringen Energieanforderungen eines elektrophoretischen Displays ist es möglich, die Anzeigeänderung allein aus der Feldenergie des Nahfeldes zu speisen. Die Anzeigeeinrichtung kann in diesem Fall im Ruhezustand des Fahrzeuges gänzlich von der Versorgung durch das Fahrzeugsystem getrennt werden, nur bei Versorgung über das externe Feld im Falle der Nahfeld-Kommunikation steht Energie zur Verfügung, um die Displayanzeige zu manipulieren. Selbst bei Fahrzeugen, bei denen das Fahrzeugnetz gänzlich stromlos ist, kann auf diese Weise ein Hinweis auf dem Display hinterlassen werden.

Die Erfindung wird nun anhand der beiliegenden Zeichnungen näher erläutert.
Figur 1 zeigt schematisch die Anordnung von zwei Anzeigeeinrichtungen an einem Fahrzeug gemäß einem ersten Ausführungsbeispiel;
Figur 2 zeigt schematisch eine drahtlose Kommunikation zur Veränderung einer Display-Anzeige.

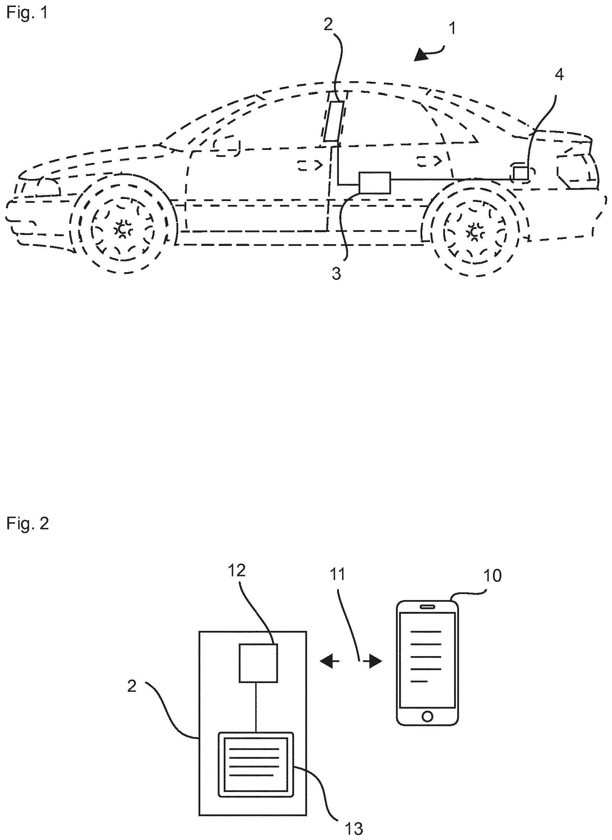

In Figur 1 ist ein Fahrzeug 1 gezeigt. In der B-Säule des Fahrzeuges ist eine Anzeigeeinrichtung 2 angeordnet. Die Anzeigeeinrichtung 2 weist einen nach außen gerichteten Displayabschnitt 13 auf. Die Anzeigeeinrichtung 2 ist außerdem mit einer Steuereinrichtung 3 im Fahrzeug gekoppelt. Außerdem ist eine weitere Anzeigeeinrichtung 4 auf der Innenseite einer Tankabdeckung angeordnet.

Über die Anzeigeeinrichtung 2 können einem Benutzer im unmittelbaren Sichtfeld vor Fahrtantritt Informationen bereitgestellt werden, die dort beispielsweise vom Fahrzeugsystem über die Steuereinrichtung 3 angezeigt werden oder über eine Kommunikationsschnittstelle von Dritten hinterlassen wurden. Außerdem können dort Informationen bereitgestellt werden, die beispielsweise dem Personal einer Mietwagenfirma Informationen über die Fahrzeugdaten und die Fahrzeugidentität bereitstellen. Beispielsweise kann nach Rückgabe eines Fahrzeuges ein QR-Code generiert werden, der zum Scannen auf der Anzeige 2 dargestellt wird, so dass ein Personal das Mietwagenanbieters diesen QR-Code scannen und auswerten kann, um die Rücknahme des Fahrzeuges zu beschleunigen.

In der Tankklappe 4 können unter Ansteuerung der zentralen Steuereinrichtung 3 beispielsweise Informationen über den Tankinhalt sowie die zu tankende Sorte Kraftstoff angezeigt werden. Auch der Kilometerstand des letzten Tankvorgangs kann dort angezeigt werden, um beispielsweise zur Führung eines Fahrtenbuches die Buchführung zu erleichtern.

In Figur 2 ist schematisch gezeigt, wie ein Dritter mit einem NFC-kommunikationsfähigen Mobilgerät 10 eine NFC-Kommunikation 11 mit einer Kommunikationseinrichtung 12 der Anzeigeeinrichtung 2 durchführt. Während die Kommunikation zwischen der Kommunikationseinrichtung 12 und dem Mobilgerät 10 geführt wird, speist sich die passive Kommunikationseinrichtung 12 aus dem Feld der NFC-Kommunikation 11. Wurden Daten zur Anzeige von dem Mobilgerät 10 an die Kommunikationseinrichtung 12 übermittelt, kann diese das Display 13 ansteuern, um dort Informationen in lesbarer Form oder kodierter Form zur Darstellung zu bringen.

## Patentansprüche

1. Kraftfahrzeug mit einer Anzeigeeinrichtung, wobei die Anzeigeeinrichtung an der Außenhaut des Fahrzeuges angeordnet und zur Ablesung von außen ausgerichtet ist,
wobei die Anzeigeeinrichtung ein Display mit einem Pixelarray mit Einzelpixelansteuerung aufweist,
wobei das Display als bistabiles elektrophoretisches Display ausgebildet ist,
**dadurch gekennzeichnet,**
**dass** die Anzeigeeinrichtung mit einer zentralen Fahrzeugsteuereinrichtung gekoppelt und von dieser zur Anzeige von Fahrzeugdaten ansteuerbar ist, ausgewählt aus der Gruppe von Daten des Kilometerstands, Tankinhalts und einem QR-Code zur Darstellung von Identifizierungsdaten des Fahrzeugs.

2. Kraftfahrzeug nach Anspruch 1, wobei das Display als elektrophoretisches Mehrfarb-Display ausgebildet ist.

3. Kraftfahrzeug nach einem der vorangehenden Ansprüche, wobei das Display als biegsames Display ausgebildet ist und auf einen gebogenen Abschnitt der Außenhaut des Fahrzeuges aufliegt.

4. Kraftfahrzeug nach einem der vorangehenden Ansprüche, wobei die Anzeigeeinrichtung mit einer Nahfeld-Kommunikationsschaltung gekoppelt ist, wobei das Display mit der Nahfeld-Kommunikationseinrichtung derart gekoppelt ist, dass über Nahfeld-Kommunikation empfangene Daten auf dem Display dargestellt werden.

5. Kraftfahrzeug nach Anspruch 4, wobei das Display und die Nahfeld-Kommunikationseinrichtung zur passiven Nahfeld-Kommunikation ausgebildet sind, wobei sowohl die Energie zur Kommunikation als auch die Energie zur Displayansteuerung aus dem Nahfeld gewonnen wird.

## Claims

1. Motor vehicle with a display device, wherein the display device is arranged on the outer skin of the vehicle and is oriented for reading from the outside,
the display device having a display with a pixel array with individual pixel control,
wherein the display is designed as a bistable electrophoretic display,
**characterized by**
the display device being coupled to a central vehicle control device and can be controlled by the latter to display vehicle data, selected from the group of data of the mileage, tank content and a QR code for displaying identification data of the vehicle.

2. Motor vehicle according to claim 1, wherein the display is designed as an electrophoretic multicolor display.

3. Motor vehicle according to any one of the preceding claims, wherein the display is formed as a flexible display and rests on a curved portion of the outer skin of the vehicle.

4. Motor vehicle according to any one of the preceding claims, wherein the display device is coupled to a near-field communication circuit, wherein the display is coupled to the near-field communication device such that data received via near-field communication is presented on the display.

5. Motor vehicle according to claim 4, wherein the display and the near-field communication device are configured for passive near-field communication, wherein both the energy for communication and the energy for display control are derived from the near-field.

## Revendications

1. Véhicule automobile avec un dispositif d'affichage, dans lequel le dispositif d'affichage est disposé sur la peau extérieure du véhicule et est orienté pour être lu de l'extérieur,
dans lequel le dispositif d'affichage comprend un affichage avec un réseau de pixels avec une commande de pixel unique,
l'affichage étant conçu comme un affichage électrophorétique bistable,
**caractérisé en ce que**
le dispositif d'affichage est couplé à un dispositif central de commande de véhicule et peut être commandé par ce dernier pour afficher des données de véhicule sélectionnées dans le groupe de données du kilométrage, du contenu du réservoir de carburant et d'un code QR pour afficher des données d'identification du véhicule.

2. Véhicule automobile selon la revendication 1, dans lequel l'affichage est conçu comme un affichage multicolore électrophorétique.

3. Véhicule automobile selon l'une des revendications précédentes, dans lequel l'affichage est conçu comme un affichage flexible et repose sur une section incurvée de la peau extérieure du véhicule.

4. Véhicule automobile selon l'une quelconque des revendications précédentes, dans lequel le dispositif d'affichage est couplé à un circuit de communication en champ proche, dans lequel l'affichage est couplé au dispositif de communication en champ proche de telle sorte que les données reçues via la communication en champ proche sont présentées sur l'affichage.

5. Véhicule automobile selon la revendication 4, dans lequel l'affichage et le dispositif de communication en champ proche sont conçus pour une communication passive en champ proche, dans lequel l'énergie pour la communication et l'énergie pour la commande de l'affichage sont obtenues à partir du champ proche.
